# EUROPEAN PATENT APPLICATION

(11) **EP 4 484 395 A1**
(43) Date of publication of application: **01.01.2025**
(21) Application number: 23181326.2
(22) Date of filing: 24.06.2023
(51) Int. Cl.: C04B 7/24, C04B 7/32

(54) **A METHOD OF PRODUCING A COMPOSITION COMPRISING CALCIUM ALUMINATE**

(71) Applicant: The Provost, Fellows, Foundation Scholars, & the Other Members of Board, of the College of the Holy & Undiv. Trinit, Dublin 2 Dublin (IE)
(72) Inventor: Pavia, Sara, Dublin, Dublin 2 (IE); Lei, Zehao, Dublin, Dublin 2 (IE)
(74) Representative: FRKelly

(57) **Abstract**

The present invention relates to method of producing a composition comprising calcium aluminate. Also disclosed are compositions comprising calcium aluminate obtained from the methods and their use as binders, cements, and in concretes. Also disclosed are articles comprising the compositions comprising calcium aluminate, which can find utility as construction commodities such as bricks, tiles, blocks, and other refractory materials.

## Description

### Field of the invention

The present invention relates to method of producing a composition comprising calcium aluminate. Also disclosed are compositions comprising calcium aluminate obtained from the methods and their use as binders, cements, and in concretes. Also disclosed are articles comprising the compositions comprising calcium aluminate, which can find utility as construction commodities such as bricks, tiles, blocks, and other refractory materials.

### Background to the invention

Calcium aluminate cement (CAC) was developed in the late nineteenth and early twentieth centuries as a response to the poor durability of Portland cement in calcium sulphate environments. CAC has since become the most widely used non-Portland cement due to its exceptional ability to retain strength at high temperatures and resist extreme thermal shock. Moreover, CAC is characterized by rapid hardening, reaching 80% of its ultimate strength within 24 hours of hydration. As a result of these properties, CAC has gained widespread use in various fields, such as the dental materials, rapid repairing mortar, and tile adhesives.

Although alumina is abundant in nature, it is typically found in combination with silica, as in clay minerals. Silica is considered an impurity in CAC production because it exists as gehlenite (C₂AS) in CAC clinkers and it is inert on hydration. This phase has no contribution to strength development or hardening but makes grinding more difficult, thus silica content is controlled (for example, <6%). Bauxite is the primary aluminium source in the manufacture of CAC. However, bauxite reserves are expected to be depleted within the next twenty years, based on current proven volumes at a 5% annual growth use rate. The difficulty of acquiring bauxite contributes to the current high cost of CAC.

To meet the growing demand for CAC and reduce its cost, efforts have concentrated on developing alternative sources of raw materials for CAC production.

### Summary of the invention

According to a first aspect of the present invention there is provided a method of producing a composition comprising calcium aluminate, the method comprising the steps of:
(a) providing a water treatment sludge;
(b) drying the water treatment sludge;
(c) adding calcium to the dried water treatment sludge; and
(d) calcinating the calcium and dried water treatment sludge.

Optionally, the method further comprises the step of reducing the particle size of the dried water treatment sludge.

Further optionally, the method further comprises the step of reducing the particle size of the dried water treatment sludge after the drying step.

Further optionally, the method further comprises the step of reducing the particle size of the dried water treatment sludge prior to the adding calcium step.

Optionally, the method comprises the steps of:
(a) providing a water treatment sludge;
(b) drying the water treatment sludge;
(c) reducing the particle size of the dried water treatment sludge;
(d) adding calcium to the dried water treatment sludge; and
(e) calcinating the calcium and dried water treatment sludge.

Preferably, the method comprises the steps of:
(a) providing a water treatment sludge;
(b) drying the water treatment sludge;
(c) reducing the particle size of the dried water treatment sludge;
(d) adding calcium to the dried water treatment sludge; and
(e) calcinating the calcium and dried water treatment sludge.

Optionally, the reducing the particle size step comprises milling the dried water treatment sludge. Further optionally, the reducing the particle size step comprises ball milling the dried water treatment sludge.

Preferably, the reducing the particle size step comprises ball milling the dried water treatment sludge.

Optionally, the reducing the particle size step is conducted for at least 30 minutes. Further optionally, the reducing the particle size step is conducted for at least 45 minutes, optionally at least 60 minutes, optionally at least 75 minutes, optionally at least 90 minutes, optionally at least 105 minutes, optionally at least 120 minutes, optionally at least 135 minutes, optionally at least 150 minutes, optionally at least 165 minutes, optionally at least 180 minutes.

Optionally, the reducing the particle size step is conducted for at least 120 minutes.

Optionally, the water treatment sludge is a liquid suspension. Alternatively, the water treatment sludge is a solid.

Preferably, the water treatment sludge is a solid.

Optionally, the water treatment sludge is a solid having a water content of at least 50%(w/w). Further optionally, the water treatment sludge is a solid having a water content of at least 55%(w/w), optionally at least 60%(w/w), optionally at least 65%(w/w), optionally at least 70%(w/w), optionally at least 75%(w/w), optionally at least 80%(w/w), optionally at least 82.5%(w/w), optionally at least 85%(w/w), optionally at least 90%(w/w), optionally at least 95%(w/w).

Preferably, the water treatment sludge is a solid having a water content of at least 82.5%(w/w).

Optionally, the water treatment sludge has a loss on ignition (LOI) of at least 5%. Optionally, the water treatment sludge has a loss on ignition (LOI) of at least 10%, optionally at least 15%, optionally at least 20%, optionally at least 25%, optionally at least 30%, optionally at least 35%, optionally at least 40%, optionally at least 45%, optionally at least 50%, optionally at least 55%, optionally at least 60%, optionally at least 65%, optionally at least 66.1%, optionally at least 70%.

Preferably, the water treatment sludge has a loss on ignition (LOI) of at least 66.1%.

Optionally, the water treatment sludge comprises aluminium.

Optionally, the water treatment sludge comprises at least one of silicon dioxide; aluminium oxide; iron(III) oxide; calcium oxide; magnesium oxide; sodium oxide; potassium oxide; chromium(II) oxide; titanium dioxide; manganese(II)oxide; phosphorus pentoxide; strontium oxide; and barium oxide.

Optionally, the water treatment sludge comprises at least one of aluminium sulfate, potassium aluminium sulfate, aluminium chloride, polymeric aluminium chloride, and polymeric aluminium aluminate.

Optionally, the water treatment sludge comprises at least 2.00, optionally at least 2.38, optionally at least 3.00, optionally at least 3.19, optionally at least 4.00, optionally at least 4.74, optionally at least 5.00% (w/w) silicon dioxide.

Optionally, the water treatment sludge comprises at least 20.00, optionally at least 21.14, optionally at least 25.00, optionally at least 28.30, optionally at least 30.00, optionally at least 35.00, optionally at least 40.00, optionally at least 42.09, optionally at least 45.00% (w/w) aluminium oxide.

Optionally, the water treatment sludge comprises at least 0.50, optionally at least 0.88, optionally at least 1.00, optionally at least 1.03, optionally at least 1.50, optionally at least 1.53, optionally at least 2.00% (w/w) iron(III) oxide.

Optionally, the water treatment sludge comprises at least 0.10, optionally at least 0.17, optionally at least 1.00, optionally at least 10.00, optionally at least 25.00, optionally at least 49.93, optionally at least 50.00, optionally at least 60.00, optionally at least 70.00, optionally at least 74.81, optionally at least 75.00% (w/w) calcium oxide.

Optionally, the water treatment sludge comprises at least 0.05, optionally at least 0.06, optionally at least 0.07, optionally at least 0.08, optionally at least 0.09, optionally at least 0.10, optionally at least 0.11, optionally at least 0.12, optionally at least 0.13, optionally at least 0.14% (w/w) magnesium oxide.

Optionally, the water treatment sludge comprises at least 0.03, optionally at least 0.04, optionally at least 0.05, optionally at least 0.06, optionally at least 0.07, optionally at least 0.08, optionally at least 0.09, optionally at least 0.10% (w/w) sodium oxide.

Optionally, the water treatment sludge comprises at least 0.03, optionally at least 0.04, optionally at least 0.05, optionally at least 0.06, optionally at least 0.07, optionally at least 0.08% (w/w) potassium oxide.

Optionally, the water treatment sludge comprises less than 0.1, optionally less than 0.01, optionally less than 0.001, optionally less than 0.002, optionally less than 0.003% (w/w) chromium(II) oxide.

Optionally, the water treatment sludge comprises at least 0.02, optionally at least 0.03, optionally at least 0.04, optionally at least 0.05% (w/w) titanium dioxide.

Optionally, the water treatment sludge comprises at least 0.03, optionally at least 0.04, optionally at least 0.05, optionally at least 0.06, optionally at least 0.07% (w/w) manganese(II)oxide.

Optionally, the water treatment sludge comprises at least 0.05, optionally at least 0.06, optionally at least 0.07, optionally at least 0.08, optionally at least 0.09, optionally at least 0.10, optionally at least 0.11, optionally at least 0.12, optionally at least 0.13% (w/w) phosphorus pentoxide.

Optionally, the water treatment sludge comprises less than 20, optionally less than 18, optionally less than 16, optionally less than 14, optionally less than 12, optionally less than 10, optionally less than 9, optionally less than 8, optionally less than 7, optionally less than 6, optionally less than 5, optionally less than 4, optionally less than 3, optionally less than 2, optionally less than 1% (w/w) silica or silicon.

Optionally, the water treatment sludge comprises less than 0.1, optionally less than 0.01% (w/w) strontium oxide.

Optionally, the water treatment sludge comprises less than 0.1, optionally less than 0.01% (w/w) barium oxide.

Optionally, the water treatment sludge has a pH of 5.5-7.5, optionally a pH of 6.0-7.0, optionally a pH of 6.5.

Optionally, the water treatment sludge has a total solids content of 2000-4000, optionally 2500-3500, optionally 3000 mg/L.

Optionally, the water treatment sludge is an alum sludge.

Preferably, the water treatment sludge is an alum sludge.

Optionally, the drying step comprises drying the water treatment sludge at a temperature of at least 50°C. Further optionally, the drying step comprises drying the water treatment sludge at a temperature of at least 55°C, optionally at least 60°C, optionally at least 65°C, optionally at least 70°C, optionally at least 75°C, optionally at least 80°C, optionally at least 85°C, optionally at least 90°C, optionally at least 95°C, optionally at least 100°C, optionally at least 105°C, optionally at least 110°C, optionally at least 115°C, optionally at least 120°C, optionally at least 125°C.

Preferably, the drying step comprises drying the water treatment sludge at a temperature of at least 105°C.

Optionally, the drying step is conducted for at least 3 hours. Further optionally, the drying step is conducted for at least 6 hours, optionally at least 9 hours, optionally at least 12 hours, optionally at least 15 hours, optionally at least 18 hours, optionally at least 21 hours, optionally at least 24 hours, optionally at least 27 hours, optionally at least 30 hours, optionally at least 33 hours, optionally at least 36 hours.

Optionally or additionally, the drying step is conducted until a first weight of the water treatment sludge is substantially the same as a second weight of the water treatment sludge.

Optionally, the drying step is conducted until a first weight of the water treatment sludge is substantially the same as a second weight of the water treatment sludge, wherein the second weight is measured at least 30 minutes after the first weight is measured. Further optionally, the drying step is conducted until a first weight of the water treatment sludge is substantially the same as a second weight of the water treatment sludge, wherein the second weight is measured at least 45 minutes, optionally at least 60 minutes, optionally at least 75 minutes, optionally at least 90 minutes, after the first weight is measured.

Preferably, the drying step is conducted until a first weight of the water treatment sludge is substantially the same as a second weight of the water treatment sludge, wherein the second weight is measured at least 60 minutes, after the first weight is measured.

By "substantially the same" is meant within less than 5%, optionally within less than 4%, optionally within less than 3%, optionally within less than 2%, optionally within less than 1%.

Optionally, the water treatment sludge, the dried water treatment sludge and/or the reduced particle size water treatment sludge is substantially amorphous.

Optionally, the water treatment sludge, the dried water treatment sludge and/or the reduced particle size water treatment sludge comprises aluminium oxide.

Optionally or additionally, the water treatment sludge, the dried water treatment sludge and/or the reduced particle size water treatment sludge comprises silicone dioxide.

Optionally or additionally, the water treatment sludge, the dried water treatment sludge and/or the reduced particle size water treatment sludge comprises iron(III) oxide.

Optionally, the calcium is a composition comprising calcium.

Optionally, the calcium is a composition comprising calcium oxide.

Optionally or additionally, the calcium is a composition comprising calcium hydroxides.

Optionally or additionally, the calcium is a composition comprising calcium carbonate.

Optionally, the calcium is a composition comprising lime (CaO).

Preferably, the calcium is a composition comprising lime (CaO).

Optionally, the calcium is added to the dried water treatment sludge in a (w/w) ratio such that the (w/w) ratio of aluminium oxide:lime(CaO) is at least 1:1, optionally at least 1.25:1, optionally at least 1.5:1, optionally at least 2:1, optionally at least 2.5:1, optionally at least 3:1, optionally at least 3.5:1, optionally at least 4:1 (aluminium oxide:lime(CaO).

Optionally, the calcium is added to the dried water treatment sludge in a (w/w) ratio of at least 1:1 (dried water treatment sludge:calcium). Further optionally, the calcium is added to the dried water treatment sludge in a (w/w) ratio of at least 1.25:1 (dried water treatment sludge:calcium), optionally at least 1.5:1 (dried water treatment sludge:calcium), optionally at least 2:1 (dried water treatment sludge:calcium), optionally at least 2.5:1 (dried water treatment sludge:calcium), optionally at least 3:1 (dried water treatment sludge:calcium), optionally at least 3.5:1 (dried water treatment sludge:calcium), optionally at least 4:1 (dried water treatment sludge:calcium).

Preferably, the calcium is added to the dried water treatment sludge in a (w/w) ratio of at least 1:1 (dried water treatment sludge: calcium).

Further preferably, the calcium is added to the dried water treatment sludge in a (w/w) ratio of at least 3:1 (dried water treatment sludge:calcium).

Optionally, the method further comprises the step of mixing the calcium and dried water treatment sludge.

Further optionally, the method further comprises the step of mixing the calcium and dried water treatment sludge after the adding calcium step.

Optionally, the method comprises the steps:
(a) providing a water treatment sludge;
(b) drying the water treatment sludge;
(c) adding calcium to the dried water treatment sludge;
(d) mixing the calcium and dried water treatment sludge; and
(e) calcinating the calcium and dried water treatment sludge.

Further optionally, the method comprising the steps of:
(a) providing a water treatment sludge;
(b) drying the water treatment sludge;
(c) reducing the particle size of the dried water treatment sludge;
(d) adding calcium to the dried water treatment sludge;
(e) mixing the calcium and dried water treatment sludge; and
(f) calcinating the calcium and dried water treatment sludge.

Preferably, the method comprising the steps of:
(a) providing a water treatment sludge;
(b) drying the water treatment sludge;
(c) reducing the particle size of the dried water treatment sludge;
(d) adding calcium to the dried water treatment sludge;
(e) mixing the calcium and dried water treatment sludge; and
(f) calcinating the calcium and dried water treatment sludge.

Optionally, the mixing step comprises milling the calcium and dried water treatment sludge. Further optionally, the mixing step comprises ball milling the calcium and dried water treatment sludge.

Preferably, the mixing step comprises ball milling the calcium and dried water treatment sludge.

Optionally, the mixing step is conducted for at least 10 minutes. Further optionally, the mixing step is conducted for at least 15 minutes, optionally at least 20 minutes, optionally at least 25 minutes, optionally at least 30 minutes, optionally at least 35 minutes, optionally at least 40 minutes, optionally at least 45 minutes, optionally at least 50 minutes, optionally at least 55 minutes, optionally at least 60 minutes.

Preferably, the mixing step is conducted for at least 60 minutes.

Optionally, the calcium and dried water treatment sludge comprises calcium and aluminium oxide.

Optionally, the calcium and dried water treatment sludge comprises calcium and aluminium oxide in a (w/w) ratio of at least 1:1 (aluminium oxide:calcium). Further optionally, the composition comprising calcium aluminate comprises calcium and aluminium oxide in a (w/w) ratio of at least 1.18:1 (aluminium oxide:calcium), optionally at least 1.5:1 (aluminium oxide:calcium), optionally at least 2:1 (aluminium oxide:calcium), optionally at least 2.5:1 (aluminium oxide:calcium), optionally at least 3:1 (aluminium oxide:calcium), optionally at least 3.5:1 (aluminium oxide:calcium), optionally at least 3.53:1 (aluminium oxide:calcium), optionally at least 4:1 (aluminium oxide:calcium).

Optionally, the calcinating step comprises heating the calcium and dried water treatment sludge to a temperature of at least 900°C. Further optionally, the calcinating step comprises heating the calcium and dried water treatment sludge to a temperature of at least 1000°C, optionally at least 1100°C, optionally at least 1200°C, optionally at least 1300°C, optionally at least 1400°C, optionally at least 1500°C.

Optionally or additionally, the calcinating step is conducted for at least 30 minutes. Further optionally or additionally, the calcinating step is conducted for at least 45 minutes, optionally at least 60 minutes, optionally at least 75 minutes, optionally at least 90 minutes, optionally at least 105 minutes, optionally at least 120 minutes, optionally at least 135 minutes, optionally at least 150 minutes, optionally at least 165 minutes, optionally at least 180 minutes, optionally at least 195 minutes, optionally at least 210 minutes, optionally at least 225 minutes, optionally at least 240 minutes.

Preferably, the calcinating step is conducted for at least 180 minutes.

Optionally, the calcium is added to the dried water treatment sludge in a (w/w) ratio of at least 1:1 (dried water treatment sludge:calcium) and the calcinating step comprises heating the calcium and dried water treatment sludge to a temperature of less than 1100°C.

Optionally, the calcium is added to the dried water treatment sludge in a (w/w) ratio of at least 1:1 (dried water treatment sludge:calcium) and the calcinating step comprises heating the calcium and dried water treatment sludge to a temperature of at least 1400°C.

Optionally, the calcium is added to the dried water treatment sludge in a (w/w) ratio of at least 3:1 (dried water treatment sludge:calcium) and the calcinating step comprises heating the calcium and dried water treatment sludge to a temperature of less than 1100°C.

Optionally, the calcium is added to the dried water treatment sludge in a (w/w) ratio of at least 3:1 (dried water treatment sludge:calcium) and the calcinating step comprises heating the calcium and dried water treatment sludge to a temperature of at least 1300°C.

Optionally, the method further comprises the step of reducing the particle size of the calcinated calcium and dried water treatment sludge.

Optionally, the method comprises the steps:
(a) providing a water treatment sludge;
(b) drying the water treatment sludge;
(c) adding calcium to the dried water treatment sludge;
(d) mixing the calcium and dried water treatment sludge;
(e) calcinating the calcium and dried water treatment sludge; and
(f) reducing the particle size of the calcinated calcium and dried water treatment sludge.

Further optionally, the method comprising the steps of:
(a) providing a water treatment sludge;
(b) drying the water treatment sludge;
(c) reducing the particle size of the dried water treatment sludge;
(d) adding calcium to the dried water treatment sludge;
(e) mixing the calcium and dried water treatment sludge;
(f) calcinating the calcium and dried water treatment sludge; and
(g) reducing the particle size of the calcinated calcium and dried water treatment sludge.

Preferably, the method comprising the steps of:
(a) providing a water treatment sludge;
(b) drying the water treatment sludge;
(c) reducing the particle size of the dried water treatment sludge;
(d) adding calcium to the dried water treatment sludge;
(e) mixing the calcium and dried water treatment sludge;
(f) calcinating the calcium and dried water treatment sludge; and
(g) reducing the particle size of the calcinated calcium and dried water treatment sludge.

Optionally, the reducing the particle size of the calcinated calcium and dried water treatment sludge step comprises milling the calcinated calcium and dried water treatment sludge. Further optionally, the reducing the particle size of the calcinated calcium and dried water treatment sludge step comprises ball milling the calcinated calcium and dried water treatment sludge.

Preferably, the reducing the particle size of the calcinated calcium and dried water treatment sludge step comprises ball milling the calcinated calcium and dried water treatment sludge.

Optionally, the reducing the particle size of the calcinated calcium and dried water treatment sludge step is conducted for at least 10 minutes. Further optionally, the reducing the particle size of the calcinated calcium and dried water treatment sludge step is conducted for at least 15 minutes, optionally at least 20 minutes, optionally at least 25 minutes, optionally at least 30 minutes, optionally at least 35 minutes, optionally at least 40 minutes, optionally at least 45 minutes, optionally at least 50 minutes, optionally at least 55 minutes, optionally at least 60 minutes.

Preferably, the reducing the particle size of the calcinated calcium and dried water treatment sludge step is conducted for at least 60 minutes.

Optionally, the composition comprising calcium aluminate comprises at least one of silicon dioxide; aluminium oxide; iron(III) oxide; calcium oxide; magnesium oxide; sodium oxide; potassium oxide; chromium(II) oxide; titanium dioxide; manganese(II)oxide; phosphorus pentoxide; strontium oxide; and barium oxide.

Optionally, the composition comprising calcium aluminate comprises at least 2.00, optionally at least 2.38, optionally at least 3.00, optionally at least 3.19, optionally at least 4.00, optionally at least 4.74, optionally at least 5.00% (w/w) silicon dioxide.

Optionally, the composition comprising calcium aluminate comprises at least 20.00, optionally at least 21.14, optionally at least 25.00, optionally at least 28.30, optionally at least 30.00, optionally at least 35.00, optionally at least 40.00, optionally at least 42.09, optionally at least 45.00% (w/w) aluminium oxide.

Optionally, the composition comprising calcium aluminate comprises at least 0.50, optionally at least 0.88, optionally at least 1.00, optionally at least 1.03, optionally at least 1.50, optionally at least 1.53, optionally at least 2.00% (w/w) iron(III) oxide.

Optionally, the composition comprising calcium aluminate comprises at least 0.10, optionally at least 0.17, optionally at least 1.00, optionally at least 10.00, optionally at least 25.00, optionally at least 49.93, optionally at least 50.00, optionally at least 60.00, optionally at least 70.00, optionally at least 74.81, optionally at least 75.00% (w/w) calcium oxide.

Optionally, the composition comprising calcium aluminate comprises at least 0.05, optionally at least 0.06, optionally at least 0.07, optionally at least 0.08, optionally at least 0.09, optionally at least 0.10, optionally at least 0.11, optionally at least 0.12, optionally at least 0.13, optionally at least 0.14% (w/w) magnesium oxide.

Optionally, the composition comprising calcium aluminate comprises at least 0.03, optionally at least 0.04, optionally at least 0.05, optionally at least 0.06, optionally at least 0.07, optionally at least 0.08, optionally at least 0.09, optionally at least 0.10% (w/w) sodium oxide.

Optionally, the composition comprising calcium aluminate comprises at least 0.03, optionally at least 0.04, optionally at least 0.05, optionally at least 0.06, optionally at least 0.07, optionally at least 0.08% (w/w) potassium oxide.

Optionally, the composition comprising calcium aluminate comprises less than 0.1, optionally less than 0.01, optionally less than 0.001, optionally less than 0.002, optionally less than 0.003% (w/w) chromium(II) oxide.

Optionally, the composition comprising calcium aluminate comprises at least 0.02, optionally at least 0.03, optionally at least 0.04, optionally at least 0.05% (w/w) titanium dioxide.

Optionally, the composition comprising calcium aluminate comprises at least 0.03, optionally at least 0.04, optionally at least 0.05, optionally at least 0.06, optionally at least 0.07% (w/w) manganese(II)oxide.

Optionally, the composition comprising calcium aluminate comprises at least 0.05, optionally at least 0.06, optionally at least 0.07, optionally at least 0.08, optionally at least 0.09, optionally at least 0.10, optionally at least 0.11, optionally at least 0.12, optionally at least 0.13% (w/w) phosphorus pentoxide.

Optionally, the composition comprising calcium aluminate comprises less than 0.1, optionally less than 0.01% (w/w) strontium oxide.

Optionally, the composition comprising calcium aluminate comprises less than 0.1, optionally less than 0.01% (w/w) barium oxide.

Optionally, the composition comprising calcium aluminate is substantially free from monocalcium aluminate. Further optionally, the composition comprising calcium aluminate is free from monocalcium aluminate. Still further optionally, the composition comprising calcium aluminate excludes monocalcium aluminate.

Optionally, the calcium aluminate is a hydraulic calcium aluminate.

Optionally, the step of providing a water treatment sludge comprises providing an aqueous suspension; flocculating the suspension to form a floc; and drying the floc.

Optionally, the aqueous suspension is a water suspension. Further optionally, the aqueous suspension is a wastewater suspension.

Optionally, the flocculating step comprises adding a flocculent to the suspension.

Optionally, the flocculating step comprises adding an organic or inorganic flocculant.

Optionally, the flocculating step comprises adding alum salt or aluminium sulphate to the suspension. Further optionally, the flocculating step comprises adding 30-80, optionally 35-75, optionally 40-70, optionally 45-65, optionally 50-60, optionally 55mg/L alum salt or aluminium sulphate to the suspension.

Optionally, the drying step comprises filter pressing the floc.

Optionally, the method is a method of producing a binder comprising calcium aluminate.

Optionally, the method is a method of producing a cement comprising calcium aluminate.

Optionally, the method is a method of producing a concrete comprising calcium aluminate. Optionally, the method of producing a concrete further comprises the step of adding at least one aggregate to the composition comprising calcium aluminate.

According to a second aspect of the present invention there is provided a composition comprising calcium aluminate obtainable by the method according to the first aspect of the present invention.

According to a third aspect of the present invention there is provided a composition comprising calcium aluminate obtained by the method according to the first aspect of the present invention.

According to a fourth aspect of the present invention there is provided an article comprising the composition comprising calcium aluminate obtained by the method according to the first aspect of the present invention.

Optionally, the article is a mortar, concrete, brick, tile, block, or other refractory material.

Optionally, the composition comprising calcium aluminate is a binder composition comprising calcium aluminate.

Optionally, the composition comprising calcium aluminate is a cement composition comprising calcium aluminate.

Optionally, the composition comprising calcium aluminate is a concrete composition comprising calcium aluminate.

Optionally, the concrete composition further comprises at least one aggregate.

Optionally, the at least one aggregate is sand.

Optionally, the concrete composition comprises the composition comprising calcium aluminate and the at least one aggregate at a (w/w) ratio of at least 1:1 (aggregate:composition comprising calcium aluminate). Further optionally, the concrete composition comprises the composition comprising calcium aluminate and the at least one aggregate at a (w/w) ratio of at least 2:1 (aggregate:composition comprising calcium aluminate), optionally at least 3:1 (aggregate:composition comprising calcium aluminate).

Preferably, the concrete composition comprises the composition comprising calcium aluminate and the at least one aggregate at a (w/w) ratio of at least 3:1 (aggregate:composition comprising calcium aluminate).

Optionally, the concrete composition further comprises water.

Optionally, the method is a method of increasing mechanical strength, optionally the flexural strength, optionally the compressive strength of a composition comprising calcium aluminate.

Optionally, the method is a method of reducing the curing or setting time of a composition comprising calcium aluminate.

### Brief description of the drawings

Accompanying drawings are provided in which:

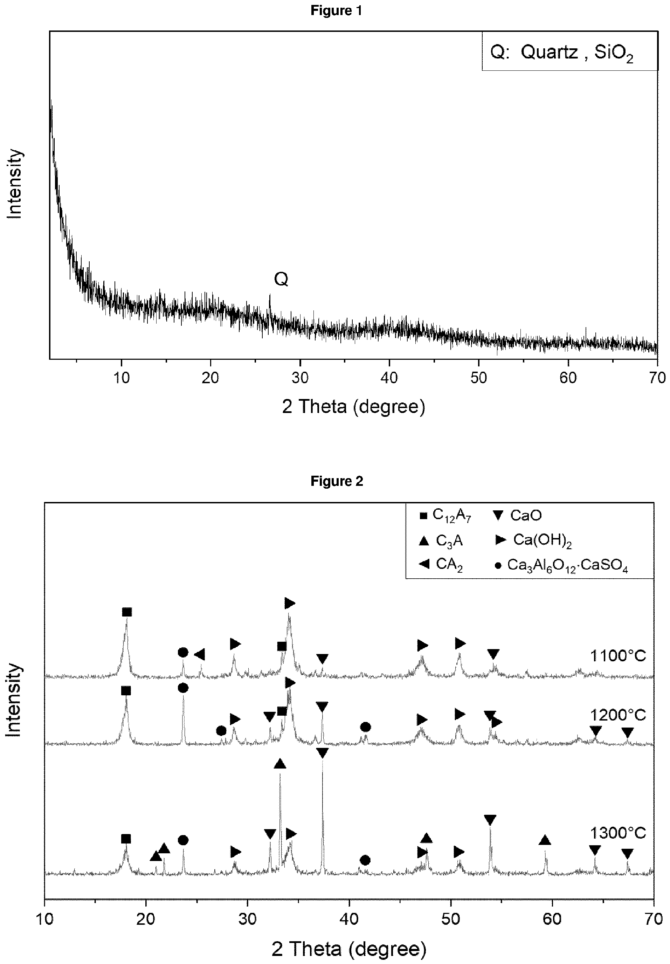

Figure 1 is an X-Ray diffractogram illustrating of the provided water treatment sludge;
Figure 2 illustrates mineral composition of compositions comprising calcium aluminate according to XRD analyses;
Figure 3 illustrates mineral composition of compositions comprising calcium aluminate according to XRD analyses;

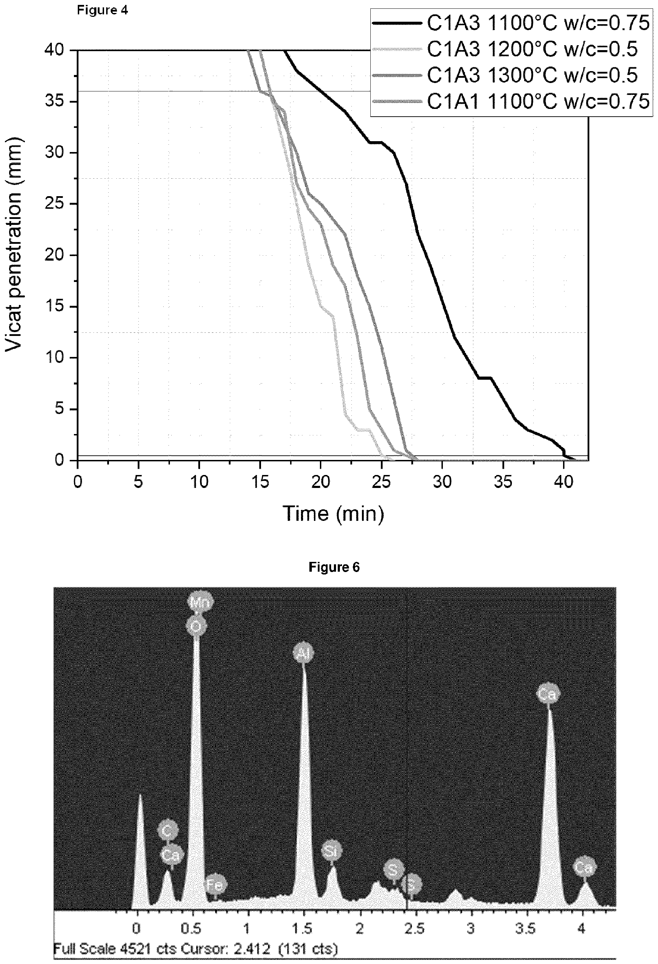

Figure 4 illustrates curing/setting time of compositions comprising calcium aluminate as measured with the Vicat test;
Figure 5 is SEM micrographs of hydration products of compositions comprising calcium aluminate at 7 days;
Figure 6 illustrates EDX analysis of compositions comprising calcium aluminate in Figure 5(b);
Figure 7 is SEM micrographs of hydration products of compositions comprising calcium aluminate at 28 days; and
Figure 8 illustrates compositions comprising calcium aluminate cured in ambient conditions at 365 days.

### Examples

### Materials and methods

### Materials

Water treatment sludge (AS) collected as a slurry from a drinking water treatment plant in Northern Ireland was utilized as an alternative source of aluminium to produce calcium aluminate cement (CAC). AS, which is generated as a by-product during the water purification process, undergoes a series of compression and dewatering procedures to form a black lumpy solid with high water content (approximately 82.5%). To prepare the AS for the CAC, the slurry was dried in an oven to a constant weight at 105°C and subsequently ground in a ball mill (Orto Alresa ISO9001) for 2 hours. X-ray diffraction (XRD) analyses by means of a Bruker D5000 apparatus of the AS revealed that the AS is primarily amorphous, with traces of crystalline quartz (see **Error! Reference source not found.**). Table 1) shows that the AS comprises mainly Al₂O₃, with some SiO₂ and Fe₂O₃.

A commercial lime (Clogrennane Lime, Ireland) (CaO) was used as a calcium source. The ground AS was mixed with lime with ratios of 1:1 (C1A1) and 1:3 (C1A3), in the ball mill for 1h, to ensure adequate mixing. The chemical composition of the mixtures are shown in Table 1. The ratio to CaO:Al₂O₃ is 3.53 and 1.18 for C1A1 and C1A3, respectively. The mixtures were calcined in an electrical furnace at temperatures of 1100, 1200 and 1300°C for 3 hours, and then ground in the ball mill for 1h to obtain CAC powders.

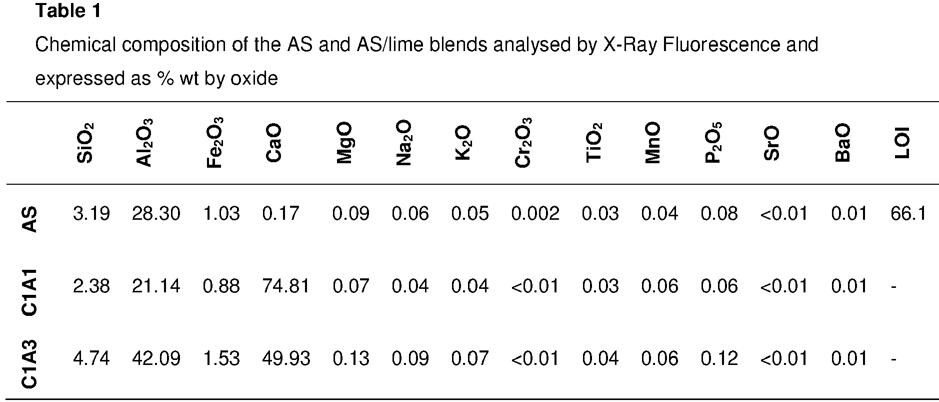

### Composition of the CAC and the resultant hydrates

The mineral composition of the CAC generated was analysed with X-Ray Diffraction (XRD) using the powder method, by means of a Bruker D5000 apparatus from 2 to 70° 2θ. The hydration products in CAC pastes, at 7 and 28 days, were investigated with a SEM apparatus featuring an EDX attachment. EDX was used for the elemental analysis of the hydrates formed. The equipment consists of a Zeiss ULTRA plus apparatus with a 20mm² Oxford Inca EDX detector. Images and composition spectra were taken for powder and paste specimens coated with gold/palladium to avoid charging.

### Strength, setting times and water demand

The water demand of the cements fabricated was measured with the initial flow test in EN 459-2. The water content was adjusted until the sample, upon removing the mould, gave desirable workability measured as the initial flow diameter after 15 jolts. The setting time of the different CAC pastes was tested in accordance with EN 196-3:2016 using the Vicat apparatus, as a method of estimating the reactivity and the type of hydrates present.

The cements produced were used to fabricate mortar specimens to test the mechanical properties. The mixing proportions of CAC and sand are constant at 1:3. The mix proportions are presented in Table 2. All solid components (CAC and sand) were mixed for 2 minutes in a mechanical mixer. The water required, as determined with the initial flow test, was then added and mixed for a further 5 minutes. The flexural and compressive strength were measured using prismatic specimens of 160 × 40 × 40 mm, with a Zwick loading machine according to EN 196-3:2016. The mechanical behaviour of the specimens was also investigated using strength/strain curves. The fresh slurry was cast into 160×40×40 mm steel moulds and cured, wrapped in polyethene film to prevent moisture loss. The specimens were demoulded after 24 hours and stored in a curing room at 20 ± 3°C, under damp hessian to maintain humidity.

**Table 2**

| Mix design of mortars made with the CACs | | | | | | |
|---|---|---|---|---|---|---|
| | **Notation** | **CAC** | | **Sand** | **Water** | **w/b** |
| | C1A11100°C | 400 | CaO:AS=1:1 calcined at 1100 °C | 1200 | 300 | 0.75 |
| | C1A1 1200 °C | 400 | CaO:AS=1:1 calcined at 1200 °C | 1200 | 200 | 0.50 |
| | C1A1 1300 °C | 400 | CaO:AS=1:1 calcined at 1300 °C | 1200 | 200 | 0.50 |
| | C1A3 1100 °C | 400 | CaO:AS=1:3 calcined at 1100 °C | 1200 | 300 | 0.75 |
| | C1A3 1200 °C | 400 | CaO:AS=1:3 calcined at 1200 °C | 1200 | 200 | 0.50 |
| | C1A3 1300 °C | 400 | CaO:AS=1:3 calcined at 1300 °C | 1200 | 200 | 0.50 |

### Example 1

### Mineral composition of the CACs

Typically, the mineral phases in commercial CAC clinkers include CA₂, CA, C₁₂A₇, C₂AS, and others depending on the CaO/Al₂O₃ ratio. Of these phases, CA is the primary active phase, accounting for approximately 65% of commercial CAC. CA sets in a few hours followed by rapid hardening. However, CA was not detected in the AS cements produced, likely due to the use of different raw materials than those in commercial CACs.

**Error! Reference source not found.** and **Error! Reference source not found.** show the mineral composition of the AS cements (C1A1 and C1A3).

The C1A1 cement (CaO:AS = 1:1) produced at lower temperature (1100°C) comprises mainly C₁₂A₇ (PDF 00-009-0413) and smaller amounts of CA₂ (PDF 00-023-1037) and C₄A₃$ (calcium sulfoaluminate or ye'elimite, PDF 00-016-0335). Calcium residuals are significant including CaO and Ca(OH)₂, indicating that not all the Ca has reacted with the Al.

C₁₂A₇ is one of the most important components of CACs and contributes to fast setting upon reaction with water. It is considered to be an intermediate product of the high-temperature reaction and usually occurs at lower calcination temperatures. CA₂ has a low hydraulic activity, requiring 28-48 hours of hydration and lasting several weeks.

When increasing the calcination temperature to **1200°C**, C₄A₃$ rises and, together with C₁₂A₇, becomes the main reactive phase, while CA₂ is no longer detected. A slight decrease in calcium residues was observed, indicating that the reaction has proceeded further.

At **1300°C,** a new phase, C₃A (PDF 00-038-1429) appears and becomes the most abundant and main reactive phase coupled to a decrease of C₁₂A₇ and C₄A₃$. C₃A is an important component of both Portland cement and CAC, which reacts rapidly with water and contributes to rapid setting. Despite a decrease in calcium residues compared to the reaction products at 1200°C, significant amounts of calcium residues remain, indicating an excess of calcium in the system.

When the AS content was increased (C1A3 cement of CaO:AS = 1:3), similar changes in the mineral composition of the cement were observed from 1100 to 1300 °C (see Table 3). However, more calcium aluminate phases were detected, as well as fewer calcium residues, indicating a better progress of the reaction and better proportioning in the design cement mix. Liquidus temperatures drop rapidly upon the addition of Al₂O₃ to CaO. Therefore, C1A1, containing a higher proportion of CaO, requires a higher reaction temperature. In other words, under the same calcination temperature, the C1A1 cement mix will form less reactive calcium aluminates than C1A3.

In general, increasing the calcination temperature further consumes the calcium in the reaction system, and tends to produce more abundant hydraulic phases. At the highest calcination temperatures, the aluminium binds more calcium. This is evident in the transition from CA₂ at 1100°C to C₃A in 1300°C, which leads to a higher hydraulic activity.

**Table 3**

| Summary of XRD results comparing the mineral composition of the cements | | | | |
|---|---|---|---|---|
| | **Cement notation** | **Calcination temperature** | **Mineral composition** | |
| | | | **main** | **subsidiary** |
| | **C1A1** | 1100°C | C₁₂A₇ | CA₂, C₄A₃$ |
| | | 1200°C | C₁₂A₇↓, C₄A₃$↑ | |
| | | 1300°C | C₃A | C₁₂A₇↓, CA$↓ |
| | **C1A3** | 1100°C | C₁₂A₇, | CA₂, C₄A₃$ |
| | | 1200°C | C₄A₃$↑ | C₁₂A₇↓ |
| | | 1300°C | C₃A, C₄A₃$ | C₁₂A₇ |

### Example 2

### Setting pattern of the CAC pastes

**Error! Reference source not found.** includes the initial and final setting times of pastes made with all the cements, as measured with the Vicat test. The pastes of C1A1 cement fired at 1200°C and C1A1 at 1300°C cannot be prepared due to their high reactivity and high hydration heat evolution. These pastes released a large amount of heat within five minutes of mixing with water, causing the water to evaporate and the paste to undergo significant expansion. At the end of this aggressive reaction, the paste did not harden but instead reverted to a powdery consistency.

The remaining CAC cements set rapidly. The pastes made with C1A1 1100°C, C1A3 1200°C and C1A3 1300°C show comparable setting patterns with an initial setting time of around 16 mins and a final setting time of around 27 mins. However, considering that the w/b ratio of C1A1 1100°C was higher than other C1A3 pastes, C1A1 1100°C exhibited the fastest setting. The C1A3 1100°C paste has a prolonged setting time due to its high w/c ratio.

The calcium aluminates in the CACs (C₁₂A₇, C₄A₃$ and C₃A) are responsible for the quick setting of the CACs pastes. This agrees with C₁₂A₇, C₄A₃$ and C₃A promoting fast setting and hardening. However, in general, the C1A1 pastes set faster than the C1A3 ones. As can be seen from **Error! Reference source not found.** and 3, the C1A1 cement contains more calcium residual minerals than the C1A3 cement. Previous studies indicate that reactive calcium aluminate phases dissolve in Ca²⁺ and Al(OH)₄⁻ rich systems. Upon reaching supersaturation, these ions form hydration products that trigger the setting process. Therefore, the high alkalinity and increased calcium ion concentration resulting from the calcium residue has probably promoted the setting process.

### Example 3

### Properties of CAC mortars

As aforementioned, mortars were made with the cements sintered with the AS waste. As seen from the setting results, the C1A1 cements fired at 1200°C and 1300°C are useless due to their high reactivity and high hydration heat evolution. Furthermore, as seen from the XRD results, the increased Al of the C1A3 cements (with CaO:AS = 1:3) produced a better reaction resulting in more calcium aluminate phases and fewer calcium residues in the cement. Therefore, their strength was measured. Table 4 includes the 7-day strength of the mortars made with the C1A3 cements (CaO: AS = 1:3). At 7 days, the CACs calcined at 1100 °C and 1300 °C have similar mechanical strengths of 2.6 MPa and 1 MPa compressive and flexural strengths respectively. The CAC calcined at 1200°C has a lower compressive strength of 1.40 MPa.

**Table 4**

| Strength of the CACs at 7 days (MPa) | | | |
|---|---|---|---|
| | | **Flexural strength** | **Compressive strength** |
| | C1A3 1100 °C | 1.00 | 2.61 |
| | C1A3 1200 °C | 0.92 | 1.40 |
| | C1A3 1300 °C | 0.93 | 2.60 |

The SEM micrographs of the cementing hydrates in the C1A3 (1100 °C and 1300 °C) hydrated cement pastes at 7d appear in **Error! Reference source not found.**. The main hydration products of the C1A3 cements are calcium aluminate hydrates, C₂AH₈, as indicated by the SEM morphologies (hexagonal plates) and the EDX analyses (**Error! Reference source not found.**). In the C1A3 pastes, the microstructure of the hydration products varies with the calcination temperature. At 1100 °C, a matrix consisting of loose stacks of C-A-H with a diameter of approximately 1 µm was observed, while the C1A3 cement paste calcined at 1300 °C showed a denser matrix consisting of larger linked C-A-H crystals. The interlocking and bonding of these hydrates may provide a higher mechanical resistance in the longer term.

Calcium aluminate hydrates undergo conversion over time, the metastable hexagonal phases tend to transform into stable cubic hydrates. The most stable hydrate in CAC is cubic C₃AH₆ which has a higher density than the hexagonal hydrates CAH₁₀ and C₂AH₈. This can result in a significant increase in porosity thereby decreasing the mechanical strength.

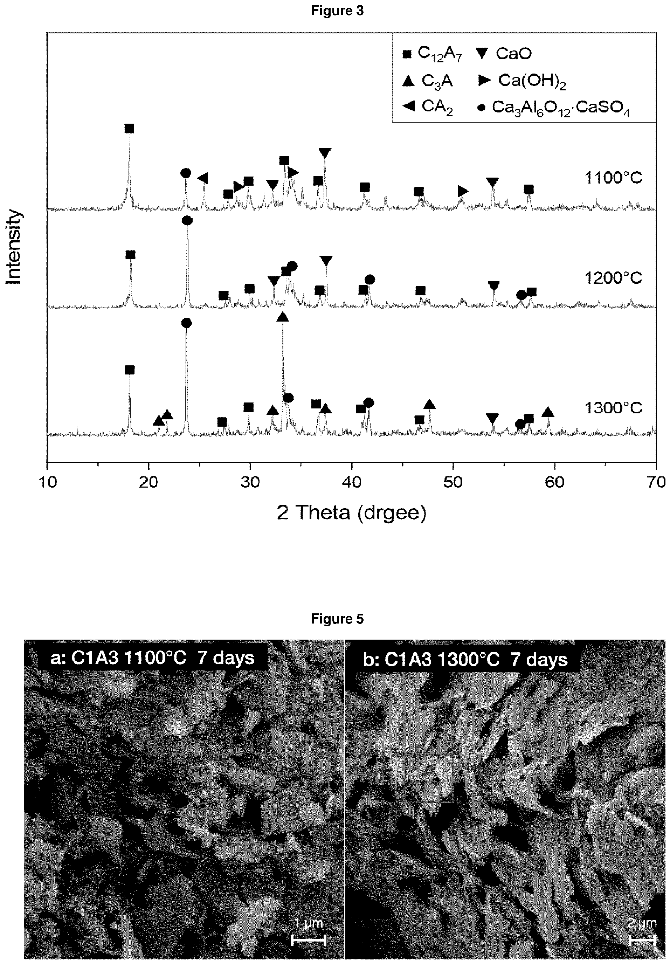

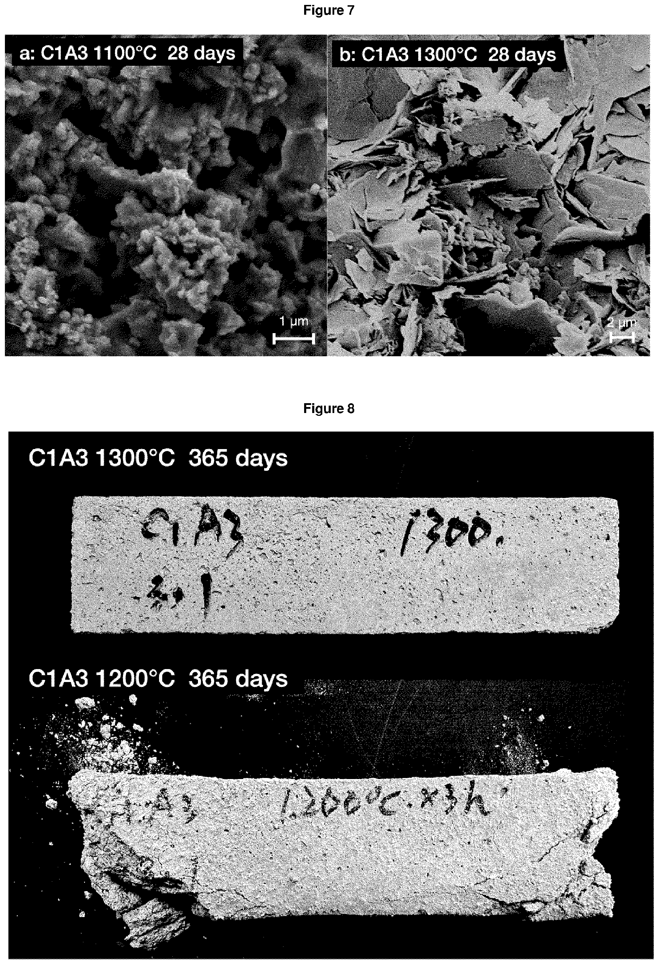

Figure 7 includes the microstructure of C1A3 pastes at 28 days. In figure 7a, a considerable amount of cubic C₃AH₆ crystals appear in lieu of the hexagonal C-A-H crystals present at 7 days (see Figure 5a), indicating that the conversion has taken place. In contrast, in C1A3 1300 °C, the dominant crystals remained hexagonal C-A-H, and the matrix is dense and compact indicating no obvious sign of conversion (see Figure 7b). The conversion causes a significant strength reduction and catastrophic failure in some of the CAC mortar specimens in the long term (1 year). This is illustrated in the macroscopic photographs of C1A3 cement mortar at 356 days (see Figure 8). The mortar of C1A3 cement calcined at 1100 °C underwent severe deterioration and lost the binding capacity after 12 months. On the contrary, the compressive strength of the 1300 °C C1A3 mortar increased significantly over time reaching 10.67 MPa at one year, a significant increase compared to the strength at 7d (2.60 MPa).

CAC is the most used non-Portland cement, known for its rapid hardening and high thermal resistance. The difficulty in obtaining raw materials, mainly bauxite, has resulted in the current high price of CAC.

AS is a flocculating precipitate, high in aluminium, produced during the water purification process in drinking water treatment plants. It is generated by the hydrolysis of alum (Al₂(SO₄)₃) which is used as a coagulant during the purification process, and its main component is aluminium hydroxide (Al(OH)₃). For a long time, the disposal of AS has not received enough attention, leading to its storage in dumps and potentially increasing the presence of heavy metals and pathogens in local soil and groundwater. Due to its amorphous properties, AS waste might be more reactive than other aluminium sources, which would result in a lower energy input for processing and a lower-carbon, more sustainable material. Calcined AS waste can be highly pozzolanic and pyroprocessing at 800°C is ideal, producing abundant calcium carboaluminate hydrate also known as calcium monocarboaluminate (Ca₄Al₂O₆CO₃.11H₂O = C₄AC H₁₁) in the hydrated pastes due to pozzolanic reaction and secondary hydration involving CO₃ ²⁻. However, using AS to produce CAC has not been disclosed.

The invention demonstrates the potential of using locally available AS, as an aluminium source, to produce CAC. This serves a dual purpose: to reduce bauxite dependence and to recycle waste. In addition, the CAC produced with AS waste would have embodied lower carbon than existing conventional cements.

Cements were produced by calcining AS and lime blends, at 1:1 and 1:3 ratios, at 1100, 1200 and 1300°C. The composition and properties of the resultant cements and their hydrates were studied with mechanical tests, X-ray diffraction (XRD) and scanning electron microscopy (SEM). The main reactive phases of the CACs were calcium aluminates such as C₃A and C₁₂A₇. Higher calcination temperatures result in reaction products of higher Ca/Al ratios. Hexagonal interlocking C-A-H hydrates were observed in the CAC pastes. The CAC prepared with a 1:3 (AS:lime) ratio sintered at 1300°C displayed the best performance, whereas high aluminium contents and low calcination temperatures caused flash setting and severe expansion.

This invention demonstrates the potential to utilize water treatment sludge waste, as an aluminium source, to produce calcium aluminium cement. Reactive phases C₃A, C₁₂A₇, C₄A₃$ and CA₂ were detected in the resulting cement. Increasing the Al content and calcination temperature facilitated the reaction between Al and Ca to produce reactive calcium aluminate compounds. The resulting cement is mainly composed of C₃A, C₄A₃$ and a small amount of C₁₂A₇. The pastes made with this cement demonstrated a rapid setting pattern and yielded strength ranging from - 3 (7 day) to 17 MPa (1 year). Interlocking hexagonal C-A-H crystals were observed in the resulting CAC matrix. However, over time, conversion of metastable hexagonal C-A-H crystals into their stable cubic polymorphs increased porosity and lowered strength. A one year-long, follow-up study has shown that the CAC produced at 1300°C is stable in ambient conditions and reached a significant strength (17MPa) after one year of curing. Therefore, water treatment sludge:CaO ratio at 3:1 and calcination at 1300°C are selected as the optimum production procedure. This invention provides an economical and low carbon approach to the production of CAC, whilst also being an effective method of recycling and adding value to AS waste.

## Claims

1. A method of producing a composition comprising calcium aluminate, the method comprising the steps of:
(a) providing a water treatment sludge;
(b) drying the water treatment sludge;
(c) adding calcium to the dried water treatment sludge; and
(d) calcinating the calcium and dried water treatment sludge.

2. A method according to claim 1, wherein water treatment sludge comprises at least one of silicon dioxide; aluminium oxide; iron(III) oxide; calcium oxide; magnesium oxide; sodium oxide; potassium oxide; chromium(II) oxide; titanium dioxide; manganese(II)oxide; phosphorus pentoxide; strontium oxide; barium oxide; aluminium sulfate, potassium aluminium sulfate, aluminium chloride, polymeric aluminium chloride, and polymeric aluminium aluminate.

3. A method according to claim 1 or 2, wherein the water treatment sludge is an alum sludge.

4. A method according to any one of claims 1-3, wherein the water treatment sludge comprises aluminium.

5. A method according to any one of claims 1-4, wherein the water treatment sludge comprises aluminium oxide.

6. A method according to any one of claims 1-5, wherein the calcium is a composition comprising lime (CaO).

7. A method according to any one of claims 1-6, wherein the calcium is added to the dried water treatment sludge in a (w/w) ratio of at least 1:1 (dried water treatment sludge:calcium).

8. A method according to any one of claims 1-7, wherein the calcium is added to the dried water treatment sludge in a (w/w) ratio of at least 3:1 (dried water treatment sludge: calcium).

9. A method according to any one of claims 1-8, wherein the calcium and dried water treatment sludge comprises calcium and aluminium oxide in a (w/w) ratio of at least 1:1 (aluminium oxide:calcium).

10. A method according to any one of claims 1-9, wherein the calcium and dried water treatment sludge comprises calcium and aluminium oxide in a (w/w) ratio of at least 3:1 (aluminium oxide:calcium).

11. A method according to any one of claims 1-10, wherein the calcinating step comprises heating the calcium and dried water treatment sludge to a temperature of at least 900°C.

12. A method according to any one of claims 1-11, wherein the calcium is added to the dried water treatment sludge in a (w/w) ratio of at least 3:1 (dried water treatment sludge:calcium) and the calcinating step comprises heating the calcium and dried water treatment sludge to a temperature of at least 1100°C.

13. A method according to any one of claims 1-11, wherein the calcium is added to the dried water treatment sludge in a (w/w) ratio of at least 3:1 (dried water treatment sludge:calcium) and the calcinating step comprises heating the calcium and dried water treatment sludge to a temperature of at least 1300°C.

14. A method according to any one of claims 1-11, wherein the step of providing a water treatment sludge comprises providing an aqueous suspension; flocculating the suspension to form a floc; and drying the floc.

15. A composition comprising calcium aluminate obtainable by a method according to any one of claims 1-14.
